# FASCICULE DE BREVET EUROPEEN

(11) **EP 4 627 195 B1**
(45) Date de publication et mention de la délivrance du brevet: **29.07.2026**
(21) Numéro de dépôt: 23822433.1
(22) Date de dépôt: 20.11.2023
(51) Int. Cl.: F01D 25/24, F02C 7/045, B64D 33/02

(54) **ENTRÉE D'AIR DESTINÉE À ÊTRE RELIÉE À UN CARTER DE SOUFFLANTE D'UNE TURBOMACHINE PAR UN ASSEMBLAGE DE TYPE À BRIDES ET ENSEMBLE PROPULSIF COMPRENANT UNE TURBOMACHINE ÉQUIPÉE D'UNE TELLE ENTRÉE D'AIR**
LUFTEINLASS, BESTIMMT ZUM VERBINDEN MIT EINEM FANGEHÄUSE EINER TURBOMASCHINE ÜBER EINE FLANSCHARTIGE VERBINDUNG UND ANTRIEBSEINHEIT, UMFASSEND EINER TURBOMASCHINE, DIE MIT EINEM SOLCHEN LUFTEINLASS AUSGESTATTET IST
AIR INLET INTENDED TO BE CONNECTED TO A FAN CASING OF A TURBOMACHINE BY A FLANGE-TYPE ASSEMBLY AND PROPULSIVE UNIT COMPRISING A TURBOMACHINE EQUIPPED WITH SUCH AN AIR INLET

(30) Priorité: 28.11.2022 FR 2212385
(43) Date de publication de la demande: 08.10.2025
(73) Titulaire: Safran Nacelles, 76700 Gonfreville-l'Orcher (FR)
(72) Inventeur: LONCLE, Alexis Yves-Marie, 77550 MOISSY-CRAMAYEL (FR); RABINEAU, Jeremie, 77550 MOISSY-CRAMAYEL (FR)
(74) Mandataire: Santarelli
(86) Numéro de dépôt international: PCT/FR2023/051827
(87) Numéro de publication internationale: WO 2024/115839

(56) Documents cités:
- EP-A1- 0 898 063
- FR-A1- 2 840 647
- FR-A1- 2 936 223
- FR-A1- 3 057 544
- FR-A1- 3 057 545
- FR-A1- 3 095 416

## Description

### Domaine technique de l'invention

La présente invention se rapporte au domaine des nacelles de turbomachines d'aéronef, et plus précisément aux entrées d'air équipant de telles nacelles.

Elle concerne plus spécifiquement la jonction d'une entrée d'air sur le carter de la nacelle, aussi appelé carter de soufflante dans le cas d'une turbomachine à double flux. L'invention s'applique à toutes les conceptions de turbomachine, par exemple les turboréacteurs à soufflante entrainée directement par un corps basse pression, entraînée indirectement par un réducteur, les turboréacteurs simple corps, double corps, simple flux et double flux.

Plus formellement, l'invention concerne une entrée d'air destinée à être reliée à un carter de soufflante d'une turbomachine par un assemblage de type à brides, ainsi qu'à un ensemble propulsif comprenant une turbomachine équipée d'une entrée d'air.

### Etat de la technique antérieure

Dans une turbomachine, ici un turboréacteur d'axe central AX, l'air est admis, suivant une direction longitudinale parallèle à l'axe AX, dans une manche d'entrée pour traverser une soufflante comportant une série de pales rotatives avant de se scinder en un flux primaire central qui circule dans une veine dite de circulation d'un flux d'air primaire et un flux secondaire entourant le flux primaire.

Le flux primaire est compressé par des étages de compresseurs avant d'atteindre une chambre de combustion, après quoi il se détend en traversant des turbines, avant d'être évacué en générant une poussée. Le flux secondaire est quant à lui propulsé directement par la soufflante pour générer la poussée principale.

Le turboréacteur comprend également une nacelle qui supporte les éléments du turboréacteur et assure la liaison du turboréacteur à l'aéronef. La nacelle comprend un carter de soufflante sur l'extrémité amont duquel est rapportée une entrée d'air - également appelée lèvre d'entrée d'air. L'entrée d'air comprend classiquement une structure annulaire et une cloison arrière sensiblement transversale qui relie un carénage radialement interne et un carénage radialement externe de la structure annulaire. Il est connu de la demande de brevet FR3095416 une entrée d'air reliée au carter de soufflante à l'aide de brides vissées l'une sur l'autre. L'entrée d'air comprend une première bride destinée à être reliée à une deuxième bride du carter de soufflante à l'aide de boulons de serrage. L'accès à la surface d'appui de la première bride pour permettre la mise en place et le serrage du boulon se fait classiquement depuis une zone radialement externe située en aval de la surface d'appui. Classiquement, un panneau d'un carénage externe du carter de soufflante est déposé pour permettre l'accès à la surface d'appui. Il existe des entrées d'air de type « à lèvre étendue » dont le carénage externe s'étend en amont de la cloison arrière. Ce type d'entrée rend bien plus complexe l'accès à la face d'appui depuis le carter de soufflante et requiert d'utiliser des outillages spéciaux couteux et contraignants. Enfin, la vérification de la conformité de l'assemblage est elle-aussi plus difficile. Il en résulte un coût accru de montage et de contrôle de telles entrées d'air ainsi qu'un risque de non-conformité plus élevé du fait de la complexité des opérations d'assemblage et de contrôle.

### Présentation de l'invention

La présente invention a pour objectif de réduire les coûts de montage d'une entrée d'air sur une turbomachine, en facilitant notamment les opérations de montage et démontage de la lèvre d'entrée d'air.

À cet effet, on prévoit une entrée d'air destinée à être reliée à un carter de soufflante d'une turbomachine par un assemblage de type à brides. L'entrée d'air comprend une structure annulaire d'axe longitudinal comprenant un carénage interne et un carénage externe, le carénage interne délimitant au moins partiellement une paroi radialement externe d'une veine de circulation d'un flux d'air dans la turbomachine selon une direction sensiblement longitudinale. L'entrée d'air comprend une bride présentant une face d'appui d'un organe de serrage. Selon l'invention, l'entrée d'air est agencée de manière à ce que la face d'appui soit accessible depuis la veine de circulation via un orifice d'accès.

On obtient ainsi une entrée d'air dont les opérations de montage et de contrôle sont facilitées, réduisant ainsi les couts de montage tout en en améliorant la fiabilité. En effet, les opérations de montage et démontage de la lèvre d'entrée d'air sont possibles malgré un accès par l'extérieur impossible.

Selon d'autres modes de réalisation particuliers, non exclusifs et optionnels de l'invention :
la bride comprend une âme s'étendant sensiblement longitudinalement et une première portion en saillie intérieure sensiblement radiale, la première portion portant la face d'appui ;
la bride comprend une aile externe s'étendant circonférentiellement autour de l'axe longitudinal, et l'aile externe comprend une première surface de liaison par serrage avec le carénage interne et/ou l'entrée d'air comprend une cloison arrière sensiblement transversale reliant le carénage interne et le carénage externe, et la bride comprend une deuxième surface de liaison par serrage avec la cloison arrière ;
la première surface de liaison par serrage s'étend circonférentiellement autour de l'axe longitudinal et/ou la deuxième surface de liaison par serrage s'étend selon une direction sensiblement orthogonale à l'axe longitudinal ;
la bride est en continuité de matière avec le carénage interne ;
l'entrée d'air comprenant un habillage amovible pour obturer l'orifice d'accès ;
des moyens de fixation de l'habillage amovible comprennent une première aile interne s'étendant au moins partiellement circonférentiellement autour de l'axe longitudinal ;
des moyens de fixation de l'habillage amovible comprennent une deuxième aile interne s'étendant au moins partiellement circonférentiellement autour de l'axe longitudinal et située en aval de la première aile interne ;
un ensemble propulsif comprend une turbomachine équipée de l'entrée d'air et un carter de soufflante pourvu d'une bride amont reliée à la bride de l'entrée d'air ;
le carter de soufflante est agencé pour accueillir un panneau acoustique qui comprend l'habillage.

D'autres caractéristiques et avantages de l'invention apparaîtront à la lecture de la description qui suit de modes de réalisation particuliers non limitatifs de l'invention.

### Brève description des figures

L'invention sera mieux comprise à la lecture de la description suivante, donnée à titre d'exemple nullement limitatif, et faite en se référant aux figures qui représentent :
[Fig. 1] la figure 1 est une représentation schématique en coupe d'un turboréacteur équipé de l'entrée d'air selon l'invention ;
[Fig. 2] la figure 2 est une représentation partielle schématique en coupe de détail de l'entrée d'air selon un premier mode de réalisation de l'invention ;
[Fig. 3] la figure 3 est une représentation partielle schématique en coupe de détail de l'entrée d'air selon un deuxième mode de réalisation de l'invention ;
[Fig. 4] la figure 4 est une représentation partielle schématique en coupe de détail de l'entrée d'air du mode de réalisation de la figure 2 ;
[Fig. 5] la figure 5 est une représentation partielle schématique en coupe de détail de l'entrée d'air selon un troisième mode de réalisation de l'invention ;
[Fig. 6] la figure 6 est une représentation partielle schématique en coupe de détail de l'entrée d'air selon un quatrième mode de réalisation de l'invention ;
[Fig. 7] la figure 7 est une représentation partielle schématique en coupe de détail de l'entrée d'air selon un quatrième mode de réalisation de l'invention.

### Description des modes de réalisation

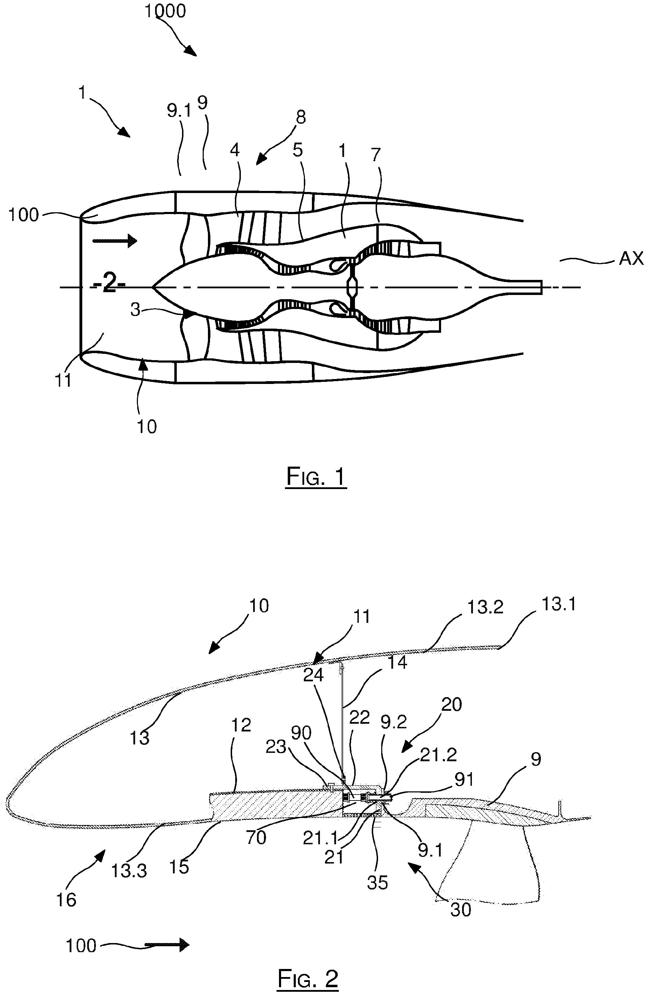

En référence à la figure 1, un ensemble propulsif 1000 comprend une turbomachine, ici un turboréacteur généralement repéré 1, dans lequel un flux d'air 100 est admis, suivant une direction longitudinale parallèle à l'axe AX de rotation de la turbomachine 1, dans une manche d'entrée 2 pour traverser une soufflante comportant une série de pales rotatives 3.

Une partie du flux d'air 100 est compressé par des étages de compresseurs 4 et 5 avant d'atteindre une chambre de combustion 6, après quoi il se détend en traversant des turbines 7, avant d'être évacué en générant une poussée. Le reste du flux d'air 100 est quant à lui propulsé directement par la soufflante pour générer la poussée principale.

Dans le présent texte, les termes « intérieur » ou « interne » et « extérieur » ou « externe » sont utilisés en référence à la position ou l'orientation par rapport à l'axe de rotation des turbines 7.

Dans le présent texte, les termes « amont » et « aval » sont utilisés en référence à la position ou l'orientation d'un élément selon le sens d'écoulement du flux d'air 100 dans le turboréacteur 1.

Le turboréacteur 1 comprend également une nacelle 8 qui supporte les éléments du turboréacteur 1 et assure sa liaison à un aéronef non représenté. La nacelle 8 comprend un carter de soufflante 9 dont l'extrémité amont comprend notamment une bride amont de carter 9.1 sur laquelle est rapportée une entrée d'air 10. La bride amont 9.1 comprend un voile 9.2 qui s'étend radialement depuis le carter 9 vers l'extérieur.

L'entrée d'air 10 comprend une structure annulaire 11 d'axe longitudinal confondu avec l'axe AX et comprend un carénage interne 12 et un carénage externe 13. Le carénage externe 13 s'étend en aval d'une cloison arrière 14 sensiblement transversale qui relie le carénage 12 et le carénage 13 pour définir une entrée d'air dite « à lèvre étendue ».

La structure annulaire 11 comprend également une cloison arrière 14 sensiblement transversale qui relie le carénage interne 12 et le carénage externe 13. Comme visible en figure 2, le carénage interne 12 délimite une paroi 15 radialement externe d'une veine de circulation 16 du flux d'air 100. Le carénage interne 12 est, ici, garni d'une protection acoustique. L'entrée d'air 10 comprend également une bride 20 destinée à recevoir la bride 9.1 de carter et qui présente une première portion 21 en saillie radiale intérieure et qui définit face d'appui 21.1. La face d'appui 21.1 est destinée à recevoir un effort de serrage d'un organe de serrage -ici une pluralité de vis 90 engagées dans des perçages 21.2 axiaux de la bride 20. Les vis 90 collaborent avec des écrous cages 91 de la bride 9.1.

Une entrée d'air 10 est dite « à lèvre étendue » lorsqu'une extrémité avale 13.1 d'une face extérieure 13.2 de l'entrée d'air 10 est située en aval de l'extrémité avale de la face intérieure 13.3 de la lèvre d'entrée d'air- ici la bride 20.

Dans la suite de la description, les pièces étant des pièces de révolution ou des secteurs de telles pièces, seule une coupe sera décrite, étant entendu qu'une telle section est classiquement répétée selon une rotation d'axe longitudinal AX.

La bride 20 comprend une âme 22 radialement externe qui s'étend circonférentiellement autour de l'axe longitudinal AX et qui comprend une première surface 23 de liaison par serrage avec le carénage interne 12 et une deuxième surface 24 de liaison par serrage avec la cloison arrière 14. La première surface 23 s'étend, ici, circonférentiellement autour de l'axe longitudinal AX et la deuxième surface 24 s'étend selon une direction sensiblement orthogonale à l'axe longitudinal AX. La bride 20 comprend donc une âme 22 s'étendant sensiblement longitudinalement. La première portion 21 s'étend intérieurement en saillie sensiblement radiale de l'âme 22.

Comme visible en figure 2, l'agencement de la bride 20 et du carénage interne 12 définit un orifice d'accès 30 qui permet d'accéder à la face d'appui 21.1 et de procéder à la mise en place et/ou le serrage des vis 90 depuis la veine de circulation 16. Ainsi, l'entrée d'air 10 est agencée de manière à ce que la face d'appui 21.1 soit accessible depuis la veine de circulation 16 via l'orifice d'accès 30.

Au sens de la présente demande, la face d'appui 21.1 est dite accessible lorsqu'il est possible de procéder à la mise en place de la vis 90 ou au serrage de celle-ci à l'aide d'un outil depuis la veine de circulation 16 lorsque l'entrée d'air 10 est en position de montage.

Les éléments identiques ou analogues à ceux précédemment décrits porteront une référence numérique identique à celle-ci dans la description qui suit d'un deuxième, troisième et quatrième mode de réalisation de l'invention.

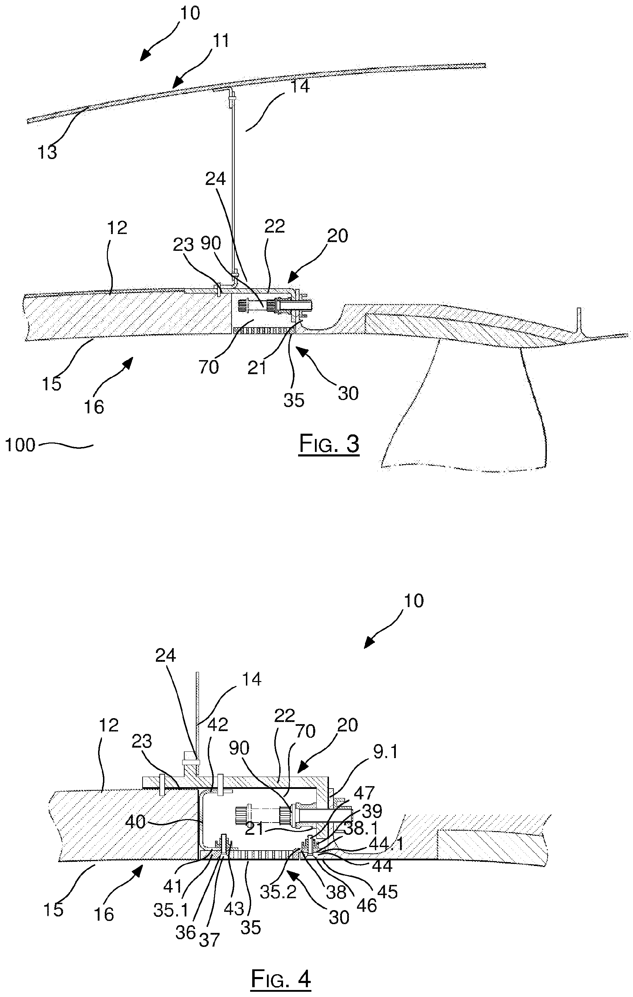

Selon un deuxième mode de réalisation de l'invention représenté en figure 3, la bride 20 est en continuité de matière avec le carénage interne 12 et comprend un profilé 25 en forme de cornière rapporté par rivetage sur l'âme 22 de la bride 20 de manière à ce que l'aile supérieure 26 de la bride 20 soit rapportée par boulonnage. L'aile supérieure 26 constitue la deuxième surface 24 de liaison par serrage avec la cloison arrière 14.

Comme visible en figures 2 et 3, l'entrée d'air 10 comprend un habillage amovible 35 pour obturer l'orifice d'accès 30. L'habillage 35 définit avec la bride 20 et le carénage 12 une première cavité 70. L'habillage 35 est, ici, perforé, c'est-à-dire qu'il comprend une pluralité de perforations qui permettent une communication aéraulique entre la cavité 70 et la veine 16, ce qui permet une atténuation acoustique.

Avantageusement, la cavité 70 peut recevoir un insert acoustique en nid d'abeille qui améliore encore l'atténuation acoustique.

Comme visible en figure 4, la bride 20 comprend un premier profilé en U 40 dont la première aile interne 41 s'étend circonférentiellement autour de l'axe longitudinal AX et dont la première aile externe 42 est vissée sur l'âme 22 de la bride 20. La première aile interne 41 est radialement en retrait de la paroi 15 d'une distance sensiblement égale à l'épaisseur de l'habillage 35 et comprend un écrou cage 43. La bride de carter 9.1 présente une deuxième aile interne 44 qui s'étend circonférentiellement autour de l'axe longitudinal AX. La surface interne 45 de l'aile 44 s'étend sensiblement au même niveau que la paroi 15 pour définir la veine 16. L'aile 44 comprend un fraisage aval 46 d'accueil d'une vis 47. La première aile interne 41 constitue un premier point de fixation de l'habillage 35 sur la bride 20. La deuxième aile interne 44 constitue un deuxième point de fixation de l'habillage 35 sur le carter 9.

L'habillage 35 comprend, ici, en son extrémité amont 35.1, un fraisage amont 36 d'accueil d'une vis 37. L'extrémité aval 35.2 de l'habillage 35 comprend, quant à elle, une patte 38 qui est radialement en retrait de la paroi 15 d'une distance sensiblement égale à l'épaisseur de l'aile 44. La patte 38 porte un écrou cage 39.

Le montage de l'entrée d'air 10 sur le carter 9 se fait en positionnant l'entrée d'air 10 sur le carter 9 de manière à ce que la portion 21 de la bride 20 vienne face au voile 9.2 de la bride 9.1. On engage ensuite des vis 90 dans les perçages 21.2 en les passant au travers l'orifice 30 depuis la veine 16. Un outil de serrage -ici une clef dynamométrique de serrage électrique- est engagé au travers de l'orifice 30 depuis la veine 16 pour procéder au serrage des vis 90 avec les écrous cages 91 et ainsi appliquer un effort de serrage entre les brides 20 et 9.1 pour relier l'entrée d'air 10 au carter de soufflante 9.

La fixation de l'habillage 35 sur l'entrée d'air 10 se fait en engageant la patte 38 dans l'orifice 30 de manière à ce que la face radialement interne 38.1 de la patte 38 vienne reposer sur la face radialement externe 44.1 de l'aile 44. L'extrémité 35.1 de l'habillage 35 vient alors en appui contre l'aile 41. La vis 37 est engagée dans le fraisage 36 et serrée pour collaborer avec l'écrou cage 43 et la vis 47 est engagée dans le fraisage 46 et serrée pour collaborer avec l'écrou cage 39. Une telle disposition facilite notamment le montage et interdit qu'une avarie des boulons provoque un entraînement de l'habillage 35 dans la soufflante.

On obtient ainsi une entrée d'air 10 permettant de réaliser les opérations de liaison avec le carter de soufflante 9 depuis la veine 16, ce qui permet une liaison plus rapide, plus aisée et donc plus fiable et moins couteuse.

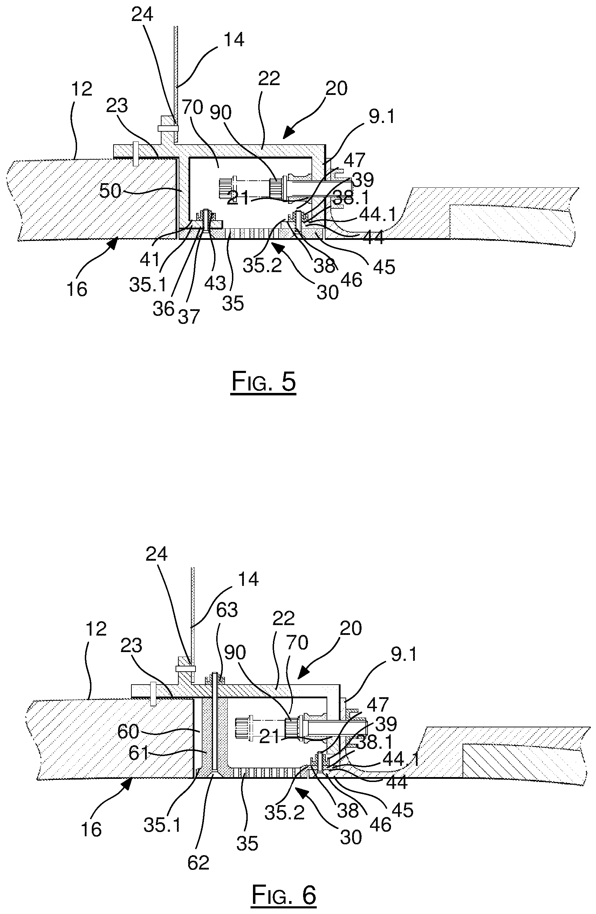

Selon un troisième mode de réalisation représenté en figure 5, la première aile interne 41 est en continuité de matière avec la bride 20 via une paroi 50 s'étendant transversalement depuis l'âme 22. La deuxième aile interne 44 s'étend en saillie de la face d'appui 21.1 pour être, elle aussi, en continuité de matière avec la bride 20.

Selon un quatrième mode de réalisation représenté en figure 6, l'habillage 35 comprend, en son extrémité amont 35.1, un pied 60 de liaison avec l'âme 22 de la bride 20. Le pied 60 comprend un alésage 61 de réception d'une vis 62 de fixation de l'habillage 35 à un écrou cage 63 porté par l'âme 22 de la bride 20.

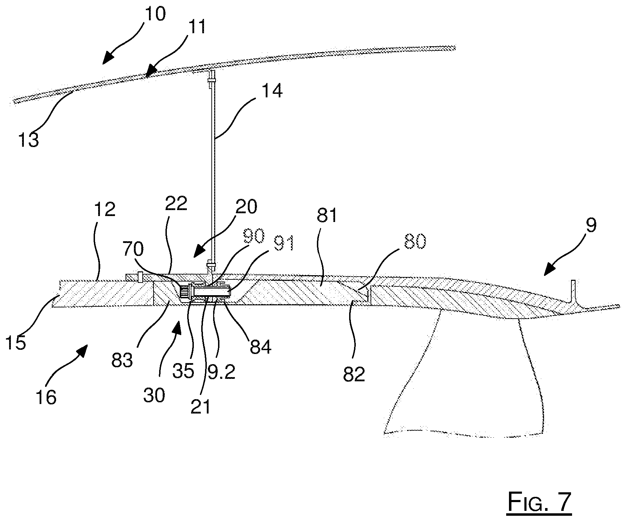

Selon un quatrième mode de réalisation représenté en figure 7, le carter 9 comprend une deuxième cavité 80 d'accueil d'un panneau acoustique 81. Le panneau acoustique 81 est fixé par vissage sur le carter 9 ainsi que l'âme 22 et comprend une portion avale 82 et une portion amont 83 reliées par une portion médiane 84 qui s'étend à l'aplomb de l'ensemble de jonction constitué de la vis 90, l'écrou cage 91, la portion 21 de la bride 20 et le voile 9.2. Comme visible en figure 6, la portion amont 83 comble partiellement la cavité 70. Ainsi, la portion médiane 84 s'étend, conjointement avec une partie de la portion médiane 83, face l'orifice 30 et réalise la fonction d'obturation de l'habillage 35. Bien entendu, l'invention n'est pas limitée aux modes de réalisation décrits, mais englobe toute variante entrant dans le champ de l'invention telle que définie par les revendications.

En particulier,
- bien qu'ici l'entrée d'air soit du type à « lèvre étendue », l'invention s'applique également à d'autres types d'entrées d'air comme par exemple à une entrée d'air dont une extrémité libre du carénage externe se situe à proximité de la cloison arrière ;
- bien qu'ici le carénage interne définisse la paroi interne d'une veine de circulation d'air, l'invention s'applique également à un carénage interne qui définirait partiellement une telle veine, comme par exemple un carénage interne raccordé à un autre élément qui contribuerait également à la définition de la veine ;
- bien qu'ici la première surface s'étende circonférentiellement autour de l'axe longitudinal et la deuxième surface s'étende selon une direction sensiblement orthogonale à l'axe longitudinal, l'invention s'applique également à une entrée d'air dans laquelle seule une des première et deuxième surface s'étende circonférentiellement autour de l'axe longitudinal ;
- bien qu'ici les brides de carter et d'entrée d'air soient décrites comme étant des éléments circulaires de révolution, l'invention s'applique également à des brides composées d'une pluralité de secteurs de couronne ;
- bien qu'ici la cornière soit rapportée par rivetage sur l'âme de la bride, l'invention s'applique également à d'autres moyens de liaison de la cornière à la bride comme par exemple le vissage, le boulonnage, le collage, le soudage ou le brasage ;
- bien qu'ici l'habillage amovible comprenne des fibres de verre agglomérées dans une résine, l'invention s'applique également à d'autres types de matériaux isolants acoustiques ;
- bien qu'ici la première aile interne soit reliée à la bride par un profilé en U, l'invention s'applique également à d'autres types de supports comme par exemple un profilé carré, en L ou un cylindre ;
- bien qu'ici la première surface de serrage soit portée par l'âme de la bride, l'invention s'applique également à d'autres types de portion externe de la bride s'étendant circonférentiellement autour de l'axe longitudinal comme par exemple une patte rapportée ;
- bien qu'ici l'assemblage de l'entrée d'air sur le carter soit réalisé à l'aide de deux brides plates boulonnées entre elles, l'invention s'applique également à d'autres assemblages de type à brides comme par exemple des brides vissées ou des brides à flancs coniques :
- bien qu'ici l'invention ait été décrite en application à un ensemble propulsif comprenant un turboréacteur à double flux et double corps, l'invention s'applique également à des ensembles propulsifs comprenant d'autres types de turbomachines comme par exemple un ensemble propulsif comprenant un turboréacteur à double flux et simple corps.

## Revendications

1. Entrée d'air (10) destinée à être reliée à un carter de soufflante (9) d'une turbomachine (1) par un assemblage de type à brides, l'entrée d'air (10) comprenant une structure annulaire (11) d'axe longitudinal (AX) comprenant un carénage interne (12) et un carénage externe (13),
le carénage interne (12) délimitant au moins partiellement une paroi (15) radialement externe d'une veine (16) de circulation d'un flux d'air (100) à travers l'entrée d'air (10) selon une direction sensiblement longitudinale, l'entrée d'air (10) comprenant une bride (20) présentant une face d'appui (21.1) d'un organe de serrage (90),
**caractérisée en ce que** l'entrée d'air (10) est agencée de manière à ce que la face d'appui (21.1) soit accessible depuis la veine de circulation (16) via un orifice d'accès (30).

2. Entrée d'air (10) selon la revendication 1, dans laquelle la bride (20) comprend une âme (22) s'étendant sensiblement longitudinalement, la bride (20) comprenant également une première portion (21) en saillie intérieure sensiblement radiale de l'âme (22), la première portion (21) portant la face d'appui (21.1).

3. Entrée d'air (10) selon l'une des revendications 1 ou 2, dans laquelle la bride (20) comprend une première surface (23) de liaison par serrage avec le carénage interne (12) et/ou, l'entrée d'air (10) comprenant une cloison arrière (14) sensiblement transversale reliant le carénage interne (12) et le carénage externe (13), la bride (20) comprend une deuxième surface de liaison (25) par serrage avec la cloison arrière (14).

4. Entrée d'air (10) selon la revendication 3, dans laquelle la première surface (23) de liaison par serrage s'étend circonférentiellement autour de l'axe longitudinal (AX) et/ou la deuxième surface (24) de liaison par serrage s'étend selon une direction sensiblement orthogonale à l'axe longitudinal (AX).

5. Entrée d'air (10) selon l'une quelconque des revendications précédentes, dans laquelle la bride (20) est en continuité de matière avec le carénage interne (12).

6. Entrée d'air (10) selon l'une quelconque des revendications précédentes, comprenant un habillage (35) amovible pour obturer l'orifice d'accès (30).

7. Entrée d'air (10) selon la revendication 6, dans laquelle des moyens de fixation de l'habillage (35) amovible comprennent une première aile interne (41) s'étendant au moins partiellement circonférentiellement autour de l'axe longitudinal (AX).

8. Entrée d'air (10) selon l'une quelconque des revendications 6 à 7, dans laquelle des moyens de fixation de l'habillage (35) amovible comprennent une deuxième aile interne (44) s'étendant au moins partiellement circonférentiellement autour de l'axe longitudinal (AX) et située en aval de la première aile interne (41).

9. Ensemble propulsif (1000) comprenant une turbomachine (1) équipée d'une entrée d'air (10) selon l'une quelconque des revendications 1 à 8, la turbomachine (1) comprenant un carter de soufflante (9) pourvu d'une bride amont (9.1) reliée à la bride (20) de l'entrée d'air (10).

10. Ensemble propulsif (1000) comprenant une turbomachine (1) équipée d'une entrée (10) d'air selon l'une quelconque des revendications 6 à 8, la turbomachine (1) comprenant un carter de soufflante (9) pourvu d'une bride amont (9.1) reliée à la bride (20) de l'entrée d'air (10), et dans lequel le carter de soufflante (9) est agencé pour accueillir un panneau acoustique (81) qui comprend l'habillage (35) .

## Patentansprüche

1. Lufteinlass (10), der zur Verbindung mit einem Gebläsegehäuse (9) einer Turbomaschine (1) über eine Flanschverbindung bestimmt ist, wobei der Lufteinlass (10) eine ringförmige Struktur (11) mit Längsachse (AX) umfasst, die eine innere Verkleidung (12) und eine äußere Verkleidung (13) umfasst,
wobei die innere Verkleidung (12) mindestens teilweise eine radial äußere Wand (15) einer Strömungsrinne (16) eines Luftstroms (100) durch den Lufteinlass (10) im Wesentlichen in Längsrichtung begrenzt, wobei der Lufteinlass (10) einen Flansch (20) umfasst, der eine Auflagefläche (21.1) eines Spannorgans (90) aufweist,
**dadurch gekennzeichnet, dass** der Lufteinlass (10) so angeordnet ist, dass die Auflagefläche (21.1) von der Strömungsrinne (16) über eine Zugangsöffnung (30) zugänglich ist.

2. Lufteinlass (10) nach Anspruch 1, wobei der Flansch (20) einen sich im Wesentlichen längs erstreckenden Steg (22) umfasst, wobei der Flansch (20) zudem einen ersten Abschnitt (21) umfasst, der im Wesentlichen radial innen vom Steg (22) vorsteht, wobei der erste Abschnitt (21) die Auflagefläche (21.1) trägt.

3. Lufteinlass (10) nach einem der Ansprüche 1 oder 2, wobei der Flansch (20) eine erste **Klemmverbindungsfläche** (23) mit der inneren Verkleidung (12) umfasst, und/oder, wobei der Lufteinlass (10) eine Rückwand (14) umfasst, die die innere Verkleidung (12) und die äußere Verkleidung (13) im Wesentlichen quer verbindet, wobei der Flansch (20) eine zweite **Klemmverbindungsfläche** (25) mit der Rückwand (14) umfasst.

4. Lufteinlass (10) nach Anspruch 3, wobei sich die erste **Klemmverbindungsfläche** (23) um die Längsachse (AX) und/oder die zweite **Klemmverbindungsfläche** (25) in einer Richtung im Wesentlichen orthogonal zur Längsachse (AX) erstreckt.

5. Lufteinlass (10) nach einem der vorhergehenden Ansprüche, wobei der Flansch (20) in einem Stück mit der inneren Verkleidung (12) ausgebildet ist.

6. Lufteinlass (10) nach einem der vorhergehenden Ansprüche, umfassend eine abnehmbare Verkleidung (35) zum Verschließen der Zugangsöffnung (30).

7. Lufteinlass (10) nach Anspruch 6, wobei Befestigungsmittel der abnehmbaren Verkleidung (35) einen ersten Innenflügel (41) umfassen, der sich mindestens teilweise um die Längsachse (AX) erstreckt.

8. Lufteinlass (10) nach einem der Ansprüche 6 bis 7, wobei Befestigungsmittel der beweglichen Verkleidung (35) einen zweiten Innenflügel (44) umfassen, der sich mindestens teilweise um die Längsachse (AX) erstreckt und sich hinter dem ersten Innenflügel (41) befindet.

9. Antriebseinheit (1000) umfassend eine Turbomaschine (1), die mit einem Lufteinlass (10) nach einem der Ansprüche 1 bis 8 ausgestattet ist, wobei die Turbomaschine (1) ein Gebläsegehäuse (9) umfasst, das mit einem vorgeschalteten Flansch (9.1) versehen ist, der mit dem Flansch (20) des Lufteinlasses (10) verbunden ist.

10. Antriebseinheit (1000) umfassend eine Turbomaschine (1), die mit einem Lufteinlass (10) nach einem der Ansprüche 6 bis 8 ausgestattet ist, wobei die Turbomaschine (1) ein Gebläsegehäuse (9) umfasst, das mit einem vorgelagerten Flansch (9.1) versehen ist, der mit dem Flansch (20) des Lufteinlasses (10) verbunden ist, und wobei das Gebläsegehäuse (9) so angeordnet ist, dass es eine Akustikplatte (81) aufnimmt, die die Verkleidung (35) umfasst.

## Claims

1. An air inlet (10) intended to be connected to a fan casing (9) of a turbine engine (1) by a flange-type assembly, the air inlet (10) comprising an annular structure (11) of longitudinal axis (AX) comprising an inner shroud (12) and an outer shroud (13),
the inner shroud (12) at least partially delimiting a radially outer wall (15) of an airflow path (16) of an airflow (100) through the air inlet (10) in a substantially longitudinal direction, the air inlet (10) comprising a flange (20) having a bearing face (21.1) of a clamping member (90), the air inlet (10) being arranged such that the bearing face (21.1) is accessible from the airflow path (16) via an access port (30).

2. The air inlet (10) according to claim 1, wherein the flange (20) comprises a core (22) extending substantially longitudinally, the flange (20) also comprising a first portion (21) projecting substantially radially inward from the core (22), the first portion (21) bearing the bearing face (21.1).

3. The air inlet (10) according to any one of claims 1 or 2, wherein the flange (20) comprises a first clamping connection surface (23) with the inner shroud (12) and/or, the air inlet (10) comprising a rear partition (14) substantially transversely connecting the inner shroud (12) and the outer shroud (13), the flange (20) comprises a second clamping connection surface (25) with the rear partition (14).

4. The air inlet (10) according to claim 3, wherein the first clamping connection surface (23) extends circumferentially about the longitudinal axis (AX) and/or the second clamping connection surface (24) extends in a direction substantially orthogonal to the longitudinal axis (AX).

5. The air inlet (10) according to any one of the preceding claims, wherein the flange (20) is in material continuity with the inner shroud (12).

6. The air inlet (10) according to any one of the preceding claims, comprising a removable fairingfairing (35) for sealing the access port (30).

7. The air inlet (10) according to claim 6, wherein means for attaching the removable fairing (35) comprise a first inner wing (41) extending at least partially circumferentially about the longitudinal axis (AX).

8. The air inlet (10) according to any one of claims 6 to 7, wherein means for attaching the removable fairing (35) comprise a second inner wing (44) extending at least partially circumferentially about the longitudinal axis (AX) and located downstream of the first inner wing (41).

9. A propulsion assembly (1000) comprising a turbine engine (1) equipped with an air inlet (10) according to any one of claims 1 to 8, the turbine engine (1) comprising a fan casing (9) provided with an upstream flange (9.1) connected to the flange (20) of the air inlet (10).

10. A propulsion assembly (1000) comprising a turbine engine (1) equipped with an air inlet (10) according to any one of claims 6 to 8, the turbine engine (1) comprising a fan casing (9) provided with an upstream flange (9.1) connected to the flange (20) of the air inlet (10), and wherein the fan casing (9) is arranged to accommodate an acoustic panel (81) which comprises the fairing (35).
